(19) **Europäisches Patentamt / European Patent Office / Office européen des brevets**

(11) **EP 4 686 288 A1**

(12) **EUROPEAN PATENT APPLICATION**
published in accordance with Art. 153(4) EPC

(43) Date of publication:
**28.01.2026 Bulletin 2026/05**

(21) Application number: **24778192.5**

(22) Date of filing: **29.03.2024**

(51) International Patent Classification (IPC):
***H04W 72/0446*** (2023.01)

(86) International application number:
**PCT/CN2024/084660**

(87) International publication number:
**WO 2024/199406 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 CN 202310364814**

(71) Applicant: **Huawei Technologies Co., Ltd.**
**Shenzhen, Guangdong 518129 (CN)**

(72) Inventors:
- **CHEN, Zhilin**
  **Shenzhen, Guangdong 518129 (CN)**
- **GUO, Kaiyang**
  **Shenzhen, Guangdong 518129 (CN)**
- **SUN, Chengjian**
  **Shenzhen, Guangdong 518129 (CN)**
- **CHEN, Zhitang**
  **Shenzhen, Guangdong 518129 (CN)**
- **ZHAO, Mingming**
  **Shenzhen, Guangdong 518129 (CN)**
- **ZHAO, Zhongliang**
  **Shenzhen, Guangdong 518129 (CN)**
- **SHI, Cao**
  **Shenzhen, Guangdong 518129 (CN)**
- **QIAN, Li**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **RESOURCE ALLOCATION METHOD AND APPARATUS**

(57) A resource allocation method is provided. The method includes: obtaining first information of a plurality of terminals, where the plurality of terminals are connected to a plurality of access points (access point, AP), and the first information includes signal interference caused to each terminal by a non-connected AP when the terminal is scheduled on a target time-frequency resource; and determining scheduling information based on the first information and the target time-frequency resource, where the scheduling information indicates a time-frequency sub-resource allocated to each terminal, the plurality of terminals are grouped into a plurality of target terminal groups, each terminal and a terminal connected to an AP that causes signal interference greater than a threshold to the terminal belong to different target terminal groups, and time-frequency sub-resources allocated to terminals included in different target terminal groups do not overlap. In this application, the terminal groups are grouped based on signal interference information, so that when receiving and sending data, each terminal device is not subject to signal interference of an AP connected to another terminal device not in a terminal group to which the terminal device belongs. This can further improve data transmission efficiency in a multi-AP collaboration scenario.

FIG. 4

## Description

This application claims priority to Chinese Patent Application No. 202310364814.2, filed with the China National Intellectual Property Administration on March 30, 2023 and entitled "RESOURCE ALLOCATION METHOD AND APPARATUS", which is incorporated herein by reference in its entirety.

## TECHNICAL FIELD

This application relates to the field of wireless local area network (wireless local area network, WLAN) technologies, and in particular, to a resource allocation method and apparatus.

## BACKGROUND

Home wireless network services are developing explosively, among which Wi-Fi services dominate and account for an increasingly large proportion. To meet reliable network coverage and a continuously increasing traffic requirement, a consumer usually considers adding a Wi-Fi access point (which may be referred to as an AP in embodiments of this application). When density of access points reaches a specific scale, wireless air interface resources become a main bottleneck for improving network performance. In a mainstream home network solution, a plurality of APs do not collaborate with each other, and disordered air interface resource contention further reduces air interface resource utilization. For example, when two neighboring AP nodes transmit signals on a same time-frequency resource, a terminal is subject to interference of a non-serving AP node, and a valid data rate significantly decreases.

Therefore, a resource allocation method in a Wi-Fi collaboration scenario needs to be provided to reduce the interference caused by the non-serving AP to the terminal.

## SUMMARY

This application provides a resource allocation method and apparatus, to improve data transmission efficiency in a multi-AP collaboration scenario.

A first aspect of this application provides a resource allocation method. The method includes: obtaining first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource; determining scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes signal interference greater than a threshold to the terminal belong to different target terminal groups, and time-frequency sub-resources allocated to terminals included in different target terminal groups do not overlap; and sending the scheduling information to the plurality of APs.

It should be understood that the threshold may be set based on an actual situation, and the threshold may quantize signal interference strength.

In the foregoing manner, the time-frequency sub-resources allocated to the terminals included in the different target terminal groups do not overlap. In other words, non-overlapping time-frequency resources are allocated to the terminals in the different terminal groups, so that the terminals in the different groups can receive and send data on different time-frequency resources. A terminal and a terminal connected to an AP that causes strong signal interference to the terminal are grouped into different terminal groups. Therefore, when receiving and sending data, each terminal device is not subject to signal interference of an AP connected to another terminal device not in a terminal group to which the terminal device belongs. This can further improve data transmission efficiency in a multi-AP collaboration scenario.

In a possible implementation, signal interference caused to each terminal by an AP connected to a non-associated terminal included in another target terminal group is greater than signal interference caused by an AP connected to a terminal included in a target terminal group to which the terminal belongs, and the non-associated terminal is a terminal connected to a different AP.

In other words, to ensure normal scheduling, the terminals may be further grouped according to more rules. For example, when a plurality of terminals are connected to a same AP, any two of the plurality of terminals connected to the same AP need to be grouped into different groups.

In a possible implementation, time-frequency sub-resources allocated to terminals included in a same target terminal group overlap.

In a possible implementation, a same time-frequency sub-resource is allocated to terminals included in a same target terminal group.

For terminals included in a same target terminal group, when data is received and sent on a same time-frequency resource, an AP connected to one terminal does not cause strong signal interference to another terminal. Therefore, overlapping time-frequency resources (for example, completely the same time-frequency resources) may be allocated to the terminal devices in the same terminal group. In this way, air interface resource utilization can be increased.

In a possible implementation, a control device may determine grouping into the target terminal group based on a value relationship between the preset threshold and the signal interference that is caused to each terminal by the non-connected AP when the terminal is scheduled on the target time-frequency resource and that is indicated in the first information, any terminal and a terminal connected to an AP that causes signal interference greater than the threshold are grouped into different terminal groups, and any terminal and a terminal connected to an AP that causes signal interference less than the threshold are grouped into different terminal groups.

In a possible implementation, the first information includes received signal strength (for example, may be an RSSI) corresponding to each terminal and each of the plurality of APs.

In a possible implementation, the determining scheduling information based on the first information and the target time-frequency resource includes: determining the scheduling information based on the first information and the target time-frequency resource to maximize data throughputs of the plurality of terminals.

In the foregoing manner, long-term information (namely, signal interference information) may help filter a high-potential policy, and reduce exploration overheads; and short-term information (namely, a transmitted data rate and the like) helps quickly adjust the policy, to ensure policy adaptation efficiency.

In a possible implementation, the method further includes: obtaining a data rate expectation obtained when each terminal is scheduled on the target time-frequency resource, where the data rate expectation is used to determine the data throughput; and the data rate expectation is determined based on a historical data rate of each terminal, or the data rate expectation is obtained through reinforcement learning by using the data rate expectation as a Q function.

A throughput of the terminal device in a current scheduling period is unknown. Therefore, a data rate expectation in the current scheduling period may be predicted based on the historical data rate of the terminal device (the data rate may be understood as a size of a data packet received by the terminal device per unit time or normalized unit time), and the throughput of the terminal device in the current scheduling period is predicted based on the data rate expectation.

In a possible implementation, the plurality of terminals include at least one first terminal and at least one second terminal, and the method further includes: obtaining second information of the at least one first terminal, where the second information includes signal interference caused to each first terminal by a part of APs in non-connected APs when the first terminal is scheduled; and predicting third information based on the second information, where the third information includes signal interference caused to each first terminal by APs other than the part of APs in the non-connected APs when the first terminal is scheduled, and the second information and the third information are used to form the first information.

In a possible implementation, the third information specifically includes a plurality of signal interference expectations of the APs other than the part of APs, and different signal interference expectations are obtained based on the second information by using different prediction methods; and the determining scheduling information based on the first information and the target time-frequency resource includes: grouping the plurality of terminals into a combination of a plurality of terminal groups based on the signal interference, where one signal interference expectation in the third information is used to determine a combination of one terminal group; selecting the target terminal group from the combination of the plurality of terminal groups based on the target time-frequency resource to maximize the data throughputs of the plurality of terminals; and determining the scheduling information based on the target time-frequency resource and the target terminal group to maximize the data throughputs of the plurality of terminals.

In actual deployment, signal interference information (for example, RSSIs) between all APs and STAs may not be obtained due to reasons such as poor terminal collaboration and poor wireless channel quality. In this embodiment of this application, concurrent groups may be respectively constructed for all possible situations by estimating missing values, and finally a slot ratio of each group is adjusted based on slice rate feedback, to select a most suitable group.

In a possible implementation, the target time-frequency resource is a resource in a scheduling period.

According to a second aspect, this application provides a resource allocation apparatus. The apparatus includes:

an obtaining module, configured to obtain first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource;

a processing module, configured to determine scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes signal interference greater than a threshold to the terminal belong to different target terminal groups, and time-frequency sub-resources allocated to terminals included in different target terminal groups do not overlap; and
a sending module, configured to send the scheduling information to the plurality of APs.

In a possible implementation, signal interference caused to each terminal by an AP connected to a non-associated terminal included in another target terminal group is greater than signal interference caused by an AP connected to a terminal included in a target terminal group to which the terminal belongs, and the non-associated terminal is a terminal connected to a different AP.

In a possible implementation, time-frequency sub-resources allocated to terminals included in a same target terminal group overlap.

In a possible implementation, a same time-frequency sub-resource is allocated to terminals included in a same target terminal group.

In a possible implementation, signal interference caused to each terminal by an AP connected to a terminal included in a target terminal group to which the terminal belongs is less than the threshold, signal interference caused to each terminal by an AP connected to a non-associated terminal included in another target terminal group is greater than the threshold, and the non-associated terminal is a terminal connected to a different AP.

In a possible implementation, the first information includes received signal strength corresponding to each terminal and each of the plurality of APs.

In a possible implementation, the processing module is specifically configured to:
determine the scheduling information based on the first information and the target time-frequency resource to maximize data throughputs of the plurality of terminals.

In a possible implementation, the obtaining module is further configured to:

obtain a data rate expectation obtained when each terminal is scheduled on the target time-frequency resource, where the data rate expectation is used to determine the data throughput; and
the data rate expectation is determined based on a historical data rate of each terminal, or the data rate expectation is obtained through reinforcement learning by using the data rate expectation as a Q function.

In a possible implementation, the plurality of terminals include at least one first terminal and at least one second terminal, and the obtaining module is further configured to:

obtain second information of the at least one first terminal, where the second information includes signal interference caused to each first terminal by a part of APs in non-connected APs when the first terminal is scheduled; and
the processing module is further configured to:
predict third information based on the second information, where the third information includes signal interference caused to each first terminal by APs other than the part of APs in the non-connected APs when the first terminal is scheduled, and the second information and the third information are used to form the first information.

In a possible implementation, the third information specifically includes a plurality of signal interference expectations of the APs other than the part of APs, and different signal interference expectations are obtained by using different prediction apparatuses based on the second information; and
the processing module is specifically configured to:

group the plurality of terminals into a combination of a plurality of terminal groups based on the signal interference, where one signal interference expectation in the second information, the third information, and fourth information is used to determine a combination of one terminal group;
select the target terminal group from the combination of the plurality of terminal groups based on the target time-frequency resource to maximize the data throughputs of the plurality of terminals; and
determine the scheduling information based on the target time-frequency resource and the target terminal group to maximize the data throughputs of the plurality of terminals.

In a possible implementation, the target time-frequency resource is a resource in a scheduling period.

A third aspect of embodiments of this application provides a resource allocation apparatus, including at least one processor. The at least one processor is coupled to a memory, the memory is configured to store a program or instructions, and the at least one processor is configured to execute the program or the instructions, so that the apparatus implements the method according to the first aspect or any possible implementation of the first aspect.

A fourth aspect of embodiments of this application provides a computer-readable storage medium that stores one or more computer-executable instructions. When the computer-executable instructions are executed by a processor, the processor performs the method according to the first aspect or any possible implementation of the first aspect.

A fifth aspect of embodiments of this application provides a computer program product (or referred to as a computer program) that stores one or more computers. When the computer program product is executed by a processor, the processor performs the method according to the first aspect or any possible implementation of the first aspect.

A sixth aspect of embodiments of this application provides a chip system. The chip system includes at least one processor, configured to support a resource allocation apparatus in implementing a function according to the first aspect or any possible implementation of the first aspect.

In a possible design, the chip system may further include a memory, configured to store program instructions and data that are necessary for the communication apparatus. The chip system may include a chip or may include a chip and another discrete component. Optionally, the chip system further includes an interface circuit, and the interface circuit provides program instructions and/or data for the at least one processor.

A seventh aspect of embodiments of this application provides a system. The communication system includes the resource allocation apparatus according to the third aspect and a plurality of APs.

For technical effect brought by any design manner of the second aspect to the seventh aspect, refer to the technical effect brought by different implementations of the first aspect. Details are not described herein again.

## BRIEF DESCRIPTION OF DRAWINGS

FIG. 1 is a diagram of a communication system to which this application is applied;
FIG. 2 is a diagram of a communication system to which this application is applied;
FIG. 3 is a diagram of a communication system to which this application is applied;
FIG. 4 is a diagram of a resource allocation method according to an embodiment of this application;
FIG. 5 is a diagram of a communication system to which this application is applied;
FIG. 6 is a diagram of signal interference in a communication system to which this application is applied;
FIG. 7 is a diagram of signal interference in a communication system to which this application is applied;
FIG. 8 is a diagram of signal interference in a communication system to which this application is applied;
FIG. 9 is a diagram of a resource allocation method according to an embodiment of this application;
FIG. 10 is a diagram of a resource allocation apparatus according to an embodiment of this application; and
FIG. 11 is a diagram of a communication apparatus according to an embodiment of this application.

## DESCRIPTION OF EMBODIMENTS

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following descriptions are implementations of this application, but are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In descriptions of this application, a term "a plurality of" means two or more unless otherwise specified. "At least one of the following items (pieces)" or a similar expression thereof refers to any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, a word like "example" or "for example" indicates giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner for ease of understanding.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions provided in this application are applicable to a WLAN scenario, for example, are applicable to an IEEE 802.11 system standard, for example, 802.11a/b/g, 802.11n, 802.11ac, 802.11ax, or a next generation of 802.11ax, for example, 802.11be or a further next generation standard.

Although embodiments of this application are mainly described by using an example of a deployed WLAN network, especially a network to which the IEEE 802.11 system standard is applied, a person skilled in the art easily understands that aspects of this application may be extended to other networks that use various standards or protocols, for example, Bluetooth (Bluetooth), a high-performance radio LAN (high performance radio LAN, HIPERLAN) (which is a wireless standard similar to the IEEE 802.11 standard, and mainly used in Europe), a wide area network (WAN), a personal area network (personal area network, PAN), or another known or later developed network. Therefore, regardless of a used coverage area and wireless access protocol, various aspects provided in this application may be applied to any proper wireless network.

Embodiments of this application may be further applied to a wireless local area network system, for example, an internet of things (internet of things, IoT) or vehicle-to-X (Vehicle-to-X, V2X) network. Certainly, embodiments of this application may be further applied to other possible communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems applicable to this application are merely examples for description, and the communication systems applicable to this application are not limited thereto. This is described herein once for all, and details are not described below again.

A resource allocation method and apparatus provided in embodiments of this application may be applied to a wireless communication system. The wireless communication system may be a wireless local area network (wireless local area network, WLAN) or a cellular network. The method may be implemented by a communication device in the wireless communication system or a chip or a processor in the communication device.

The following describes an application architecture of this application with reference to accompanying drawings.

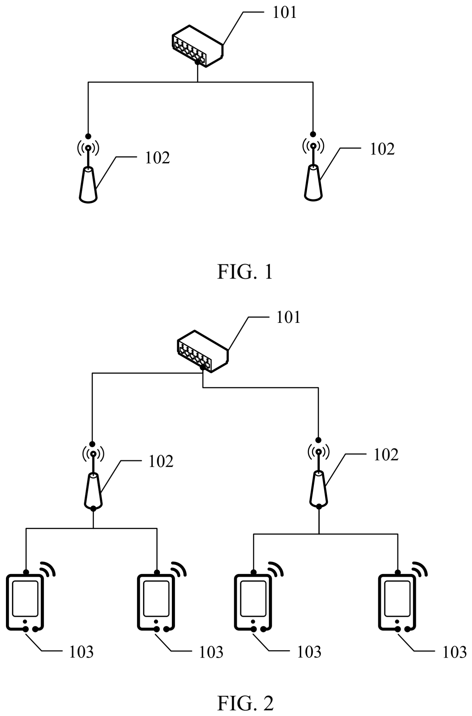

Refer to FIG. 1. To meet a requirement on a coverage area of a WLAN, a network structure of the WLAN may be set to a wireless controller 101 (or may be referred to as a control device) and a plurality of access point devices (AP devices) 102 connected to the wireless controller 101. In this case, the AP is used as an access point of a station STA to implement network communication of the STA.

FIG. 2 is a diagram of a communication system according to an embodiment of this application. As shown in FIG. 2, the communication system mainly includes at least one access point device (AP device) 102 and at least one station (STA) device 103.

The station device 103 may be, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the station device 103 may support the 802.11be standard or a next-generation WLAN standard of the 802.11be standard.

Embodiments of this application may be applied to a Wi-Fi multi-point coordination scenario, for example, may be applied to a scenario in which there are a plurality of rooms in a house (for example, a home scenario or an office scenario). A Wi-Fi access point is deployed in each room to provide a service for a terminal device. The terminal device may include a mobile phone, a personal computer, a tablet device, and various smart home devices. A data transmission service is transmitted over a carrier's network, linked to the network in the house through an optical fiber link, and then delivered by a Wi-Fi node (nearest) that the terminal accesses. Because there are the plurality of Wi-Fi access points, data transmission over a wireless air interface is affected by interference. The interference causes a false alarm of the terminal device and affects normal data receiving.

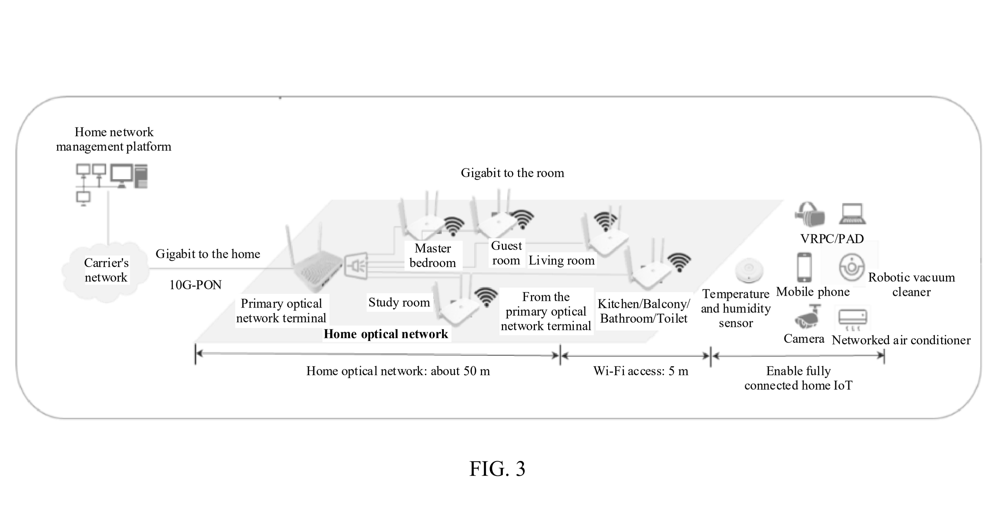

A diagram of connection relationships between the devices may be shown in FIG. 3. A plurality of Wi-Fi access points are connected to one central processing node (indicated by a "primary optical network terminal" in the figure, and may also be referred to as a control device in embodiments of this application), and each AP covers a plurality of STAs. When the STA has a data transmission requirement, the central processing node collects information collected by each Wi-Fi access point, and formulates a transmission policy for each Wi-Fi access point to execute. The specific transmission policy may relate to but is not limited to air interface resource allocation, transmit power configuration, and air interface contention parameter setting between the Wi-Fi and the terminal. The Wi-Fi access point is responsible for serving the accessed terminal device, and transmitting, to the terminal device over an air interface and a wireless channel, a data packet requested by the terminal. A terminal user can have a plurality of experience requirements such as a minimum data rate and a maximum tolerable delay. Overall, network performance can be measured by a sum of all user data rates (namely, a network throughput).

Home wireless network services are developing explosively, among which Wi-Fi services dominate and account for an increasingly large proportion. To meet reliable network coverage and a continuously increasing traffic requirement, a consumer usually considers adding a Wi-Fi access point (which may be referred to as an AP in embodiments of this application). When density of access points reaches a specific scale, wireless air interface resources become a main bottleneck for improving network performance. In a mainstream home network solution, a plurality of APs do not collaborate with each other, and disordered air interface resource contention further reduces air interface resource utilization. For example, when two neighboring AP nodes transmit signals on a same time-frequency resource, a terminal is subject to interference of a non-serving AP node, and a valid data rate significantly decreases. Therefore, a resource allocation method in a Wi-Fi collaboration scenario needs to be provided to reduce the interference caused by the non-serving AP to the terminal.

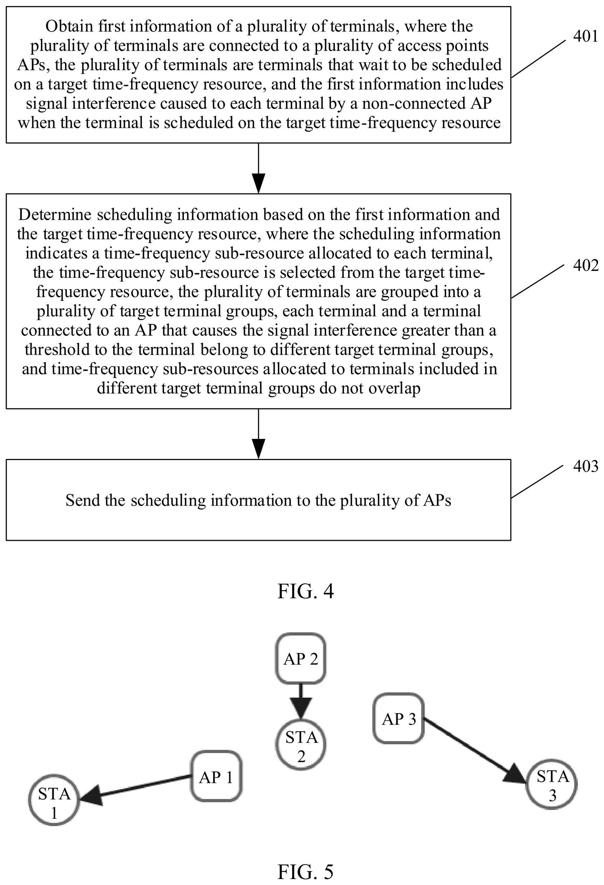

Refer to FIG. 4. An embodiment of a resource allocation method in embodiments of this application includes the following steps.

401: Obtain first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource.

The plurality of terminals are connected to the plurality of access points APs, and each terminal may be connected to one AP. For example, the plurality of terminals may include a terminal 1 and a terminal 2. The terminal 1 may be connected to an AP 1, and the terminal 2 may be connected to an AP 2. Alternatively, a same AP may be connected to a plurality of terminals. For example, the plurality of terminals may further include a terminal 3, and both the terminal 1 and the terminal 3 may be connected to the AP 1.

The plurality of APs may be connected to a control device, for example, connected to a same primary optical network terminal. The control device may formulate a resource allocation policy corresponding to each terminal device, and transmit the resource allocation policy to each AP for execution by the AP.

In a possible implementation, the plurality of terminal devices are the terminals that wait to be scheduled on the target time-frequency resource.

Each of the plurality of terminal devices may be a terminal device that has a transmission requirement. For example, the plurality of terminals may be the terminals that wait to be scheduled on the target time-frequency resource. Specifically, the plurality of terminal devices may send transmission requirements to the APs, and the plurality of APs may transfer indications of the transmission requirements to the control device. The control device needs to determine resource allocation information for the plurality of terminal devices, and the resource allocation information indicates a time-frequency resource occupied by each of the plurality of terminal devices on the target time-frequency resource when the terminal device receives and sends data.

"Waiting to be scheduled" may be understood as that the terminal needs to transmit data. In actual application, in addition to the terminal that waits to be scheduled, terminals connected to the control device may further include a terminal that does not wait to be scheduled.

In a possible implementation, the target time-frequency resource is a resource in a scheduling period. One scheduling period may be, for example, one transmission time interval (transmission time interval, TTI) or a plurality of TTIs.

The time-frequency resource in this application may be indicated by a quantity of resource elements (resource elements, REs), a quantity of precoding resource block groups (precoding resource block groups, PRGs), a quantity of physical resource blocks (physical resource blocks, PRBs), a resource block group (resource block group, RBG), or a subband (subband or bandwidth part, BWP). For example, the time-frequency resource may be a scheduling bandwidth in a current scheduling period.

In a possible implementation, the control device may obtain the first information of the plurality of terminals, where the plurality of terminals are connected to the plurality of access points APs, and the first information includes signal interference caused to each terminal by a non-connected AP when the terminal is scheduled on the target time-frequency resource.

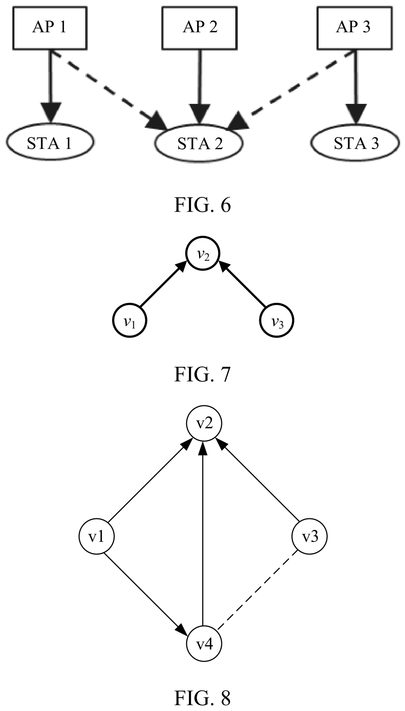

If the plurality of APs simultaneously serve the plurality of terminal devices, mutual interference occurs. Because topology relationships of nodes on the network are different, interference link strength is different. As shown in FIG. 5, an arrow indicates a service relationship between an AP and a STA. A STA 2 is close to a non-serving AP 1 and a non-serving AP 3. Therefore, when all APs simultaneously transmit signals, the STA 2 is severely interfered. On the contrary, a STA 1 and a STA 3 are far away from non-serving APs. Therefore, even if all the APs simultaneously transmit the signals, interference to the STA 1 and the STA 3 is very low. In conclusion, services and strong interference relationships on the entire network may be indicated in FIG. 6, where a dashed line indicates strong interference.

In a possible implementation, to enable each of the plurality of terminal devices to experience low signal interference from the non-serving AP when the plurality of terminal devices receive and send data on the target time-frequency resource, the control device needs to obtain information about the signal interference caused to each terminal device by the non-serving (or may be described as being non-connected) AP (namely, the first information in this embodiment of this application), and performs resource allocation based on the information.

In a possible implementation, the first information includes signal interference caused to each terminal by a non-connected AP when the terminal is scheduled on the target time-frequency resource. For example, the first information includes received signal strength RSSI corresponding to each terminal and each of the plurality of APs. For example, a STA i and a STA j respectively report transmission requirements to an AP i and an AP j, and the AP i and the AP j report the transmission requirements to the control device. The control device may send an RSSI report instruction to the terminal node that has the transmission requirement (specifically, the RSSI report instruction may be forwarded by the AP). In this case, the AP i reports RSSIs of links AP i-STA i and AP i-STA j to the control device, and the AP j reports RSSIs of links AP j-STA i and AP j-STA j to the control device.

402: Determine scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, signal interference caused to each terminal by an AP connected to a terminal included in a target terminal group to which the terminal belongs is less than a threshold, and time-frequency sub-resources allocated to terminals included in different target terminal groups do not overlap.

In a possible implementation, the terminal device may group the plurality of terminals into the plurality of target terminal groups based on the first information and the target time-frequency resource, and each target terminal group may include at least one terminal device. When receiving and sending data on a same time-frequency resource, each terminal device is not subject to signal interference of an AP connected to another terminal device in a terminal group to which the terminal device belongs (or is subject to acceptable weak signal interference); and when receiving and sending data on a same time-frequency resource, each terminal device is subject to signal interference of an AP connected to another terminal device not in a terminal group to which the terminal device belongs (or is subject to strong signal interference).

In other words, signal interference caused to each terminal by an AP connected to a terminal included in a target terminal group to which the terminal belongs is less than the threshold.

Therefore, time-frequency resource allocation may be performed, based on the following constraint, on the target terminal groups obtained through grouping: The time-frequency sub-resources allocated to the terminals included in the different target terminal groups do not overlap. In other words, non-overlapping time-frequency resources are allocated to the terminals in the different terminal groups. In this way, the terminals in the different groups can receive and send data on different time-frequency resources. Therefore, when receiving and sending data, each terminal device is not subject to signal interference of an AP connected to another terminal device not in a terminal group to which the terminal device belongs.

In a possible implementation, the control device may determine grouping into the target terminal group based on a value relationship between the preset threshold and signal interference that is caused to each terminal by a non-connected AP when the terminal is scheduled on the target time-frequency resource and that is indicated in the first information, any terminal and a terminal connected to an AP that causes signal interference greater than the threshold are grouped into different terminal groups, and any terminal and a terminal connected to an AP that causes signal interference less than the threshold are grouped into different terminal groups.

It should be understood that the threshold may be set based on an actual situation, and the threshold may quantize signal interference strength.

It should be understood that the terminals may be further grouped according to more rules. For example, when a plurality of terminals are connected to a same AP, any two of the plurality of terminals connected to the same AP need to be grouped into different groups.

For example, the first information is indicated as RSSI information. For each STA that has a data transmission requirement, the control device may identify, based on the obtained RSSI information, whether a different AP causes strong interference to the STA (whether an RSSI is less than a threshold), to construct concurrent groups.

In this embodiment of this application, it is considered that interference is coordinated by allocating an orthogonal resource to a transmission link with strong interference. FIG. 5 is used as an example. The AP 2 and the AP 1/AP 3 are arranged to serve on different time-frequency resources, so that strong interference can be avoided. In other words, there are two sending groups on the network. A first group is that "the AP 2 transmits a signal to the STA 2", and a second group is that "the AP 1 and the AP 3 simultaneously send signals to the STA 1 and the STA 3 respectively". The grouping is performed based on network performance to ensure that there is no strong interference.

The signal interference information may be coarse-grained information, and mainly depends on locations of the interfering AP and the terminal, a surrounding scattering environment, and the like. Therefore, the signal interference information does not change significantly in a long time. However, only the interference link strength (and the transmission link strength) is known, and an effective data rate during signal transmission cannot be accurately estimated. Therefore, the information can only roughly identify the strong interference on the network, namely, interference that needs to be suppressed to ensure the network performance. A concurrent group construction module formulates potentially efficient concurrent combinations based on the information. Each concurrent combination includes a plurality of served STAs, and there is no strong interference in signal transmission between the STAs. As shown in FIG. 5, the STA 2 is subject to strong interference of the AP 1, and the STA 1 and the STA 2 are not subject to any strong interference. In this case, two concurrent groups: {STA 2} and {STA 1, STA 3} are constructed.

In a possible implementation, time-frequency sub-resources allocated to terminals included in a same target terminal group overlap.

For example, in a possible implementation, a same time-frequency sub-resource is allocated to terminals included in a same target terminal group.

For terminals included in a same target terminal group, when data is received and sent on a same time-frequency resource, an AP connected to one terminal does not cause strong signal interference to another terminal. Therefore, overlapping time-frequency resources (for example, completely the same time-frequency resources) may be allocated to the terminal devices in the same terminal group. In this way, air interface resource utilization can be increased.

The following describes a manner for grouping into a terminal group in this embodiment of this application with reference to a specific example.

The scenario shown in FIG. 5 is used as an example. The AP 1/AP 2/AP 3 separately report link signal strength from the STAs to the control device. Table 1 shows an example of the link signal strength.

Table 1

| RSSI | AP 1 | AP 2 | AP 3 |
|------|------|------|------|
| STA 1 | -32 | -55 | -46 |
| STA 2 | -47 | -39 | -49 |
| STA 3 | -40 | -53 | -26 |

The control device may determine the strong interference according to a strong interference determining criterion:

$$RSSI_{AP_i, STA_i} - RSSI_{AP_j, STA_i} \leq Threshold;$$

When the foregoing formula is met, it is determined that the AP j causes the strong interference to the STA i. Threshold is a preset parameter. For example, if the parameter is set to 10, it is determined that the AP 1/AP 3 causes the strong interference to the STA 2, and other interference is weak interference. 1 indicates the strong interference, and 0 indicates the weak interference. In this case, interference relationships may be indicated in Table 2.

Table 2

|  | AP 1 | AP 2 | AP 3 |
|------|------|------|------|
| STA 1 |  | 0 | 0 |
| STA 2 | 1 |  | 1 |
| STA 3 | 0 | 0 |  |

The foregoing interference relationship is indicated in an interference diagram shown in FIG. 7.

A node $v_i$ indicates a transmission link from the AP i to the STA i, and a directed edge $v_i \rightarrow v_j$ indicates that the AP i causes strong interference to the STA j.

a: Add the node $v_i$ to a group $G_i$ starting from the STA i.

b: Select, from FIG. 7, a node that is not connected to an edge of a node in $G_i$, and add the node to the group $G_i$.

c: Repeat b until no node can be added.

d: Repeat a to c until all users are added to concurrent groups.

Then, the two groups: {STA 1, STA 3} and {STA 2} may be obtained.

Optionally, AP-STA signal strength may be updated once in every T scheduling periods, and the foregoing steps are performed to re-determine grouping into the terminal group.

The following describes the manner of grouping into the terminal group in this embodiment of this application with reference to a specific example. Different from the example corresponding to FIG. 5, in this embodiment of this application, a same AP may serve a plurality of STAs. Therefore, during grouping into the terminal group, a constraint that non-overlapping time-frequency resources are allocated to different terminals served by a same AP further needs to be considered.

In this case, signal interference caused to each terminal by an AP connected to a non-associated terminal included in another target terminal group is greater than signal interference caused by an AP connected to the terminal included in a target terminal group to which the terminal belongs, signal interference caused to each terminal by an AP connected to an associated terminal included in another target terminal group is less than signal interference caused by an AP connected to a terminal included in a target terminal group to which the terminal belongs, and the non-associated terminal is a terminal connected to a different AP.

This embodiment describes a scenario in which a single AP serves a plurality of STAs. It is considered that the AP 1 serves the STA 1, the AP 2 serves the STA 2, and the AP 3 serves the STA 3 and a STA 4.

Link signal strength fed back by each STA is shown in Table 3.

Table 3

| RSSI | AP 1 | AP 2 | AP 3 |
|------|------|------|------|
| STA 1 | -32 | -55 | -46 |
| STA 2 | -47 | -39 | -49 |
| STA 3 | -40 | -53 | -26 |
| STA 4 | -39 | -61 | -33 |

Further, interference relationships may be indicated in Table 4.

Table 4

| | AP 1 | AP 2 | AP 3 |
|------|------|------|------|
| STA 1 | | 0 | 0 |
| STA 2 | 1 | | 1 |
| STA 3 | 0 | 0 | |
| STA 4 | 1 | 0 | |

The foregoing interference relationship may be indicated in an interference diagram shown in FIG. 8. The node $v_i$ indicates a transmission link from an AP to a STA, a directed (directed) edge $v_i \rightarrow v_j$ indicates that data transmission of the STA i causes strong interference to the STA j, and an undirected edge (dashed line) indicates that only one of a plurality of STAs served by each AP can be scheduled on a same resource.

Concurrent group construction is performed to obtain three groups: {STA 1, STA 3}, {STA 2}, and {STA 4}. AP-STA signal strength is updated once in every T scheduling periods, and this is performed by the foregoing concurrent grouping module.

In a possible implementation, the terminal group obtained through grouping may restrict a relationship between a time-frequency resource allocated to a terminal device in a different group and a time-frequency resource allocated to a terminal device in the group. The following describes how to determine a specific size of a time-frequency resource specifically allocated to each terminal device.

In a possible implementation, the scheduling information may be determined based on the first information and the target time-frequency resource to maximize data throughputs of the plurality of terminals.

In a possible implementation, a data rate expectation obtained when each terminal is scheduled on the target time-frequency resource may be obtained, where the data rate expectation is used to determine the data throughput; and the data rate expectation is determined based on a historical data rate of each terminal, or the data rate expectation is obtained through reinforcement learning by using the data rate expectation as a Q function.

A throughput of the terminal device in a current scheduling period is unknown. Therefore, a data rate expectation in the current scheduling period may be predicted based on the historical data rate of the terminal device (the data rate may be understood as a size of a data packet received by the terminal device per unit time or normalized unit time), and the throughput of the terminal device in the current scheduling period is predicted based on the data rate expectation.

In a possible implementation, the data rate expectation obtained when each terminal is scheduled on the target time-frequency resource may be determined based on the historical data rate of the terminal.

For example, each AP may feed back a data rate $R_{g,s}$ of each STA ($s$) in each terminal group ($g$) in a previous scheduling period to the control device, and the control device may update a historical average data rate $\hat{R}_{g,s}$:

$$\hat{R}_{g,s} = \alpha \cdot R_{g,s} + (1 - \alpha) \cdot \hat{R}_{g,s},$$

where $\alpha$ is a given hyperparameter for implementation, and
time-frequency resource allocation for each group is determined by solving the following problem:

$$\max_{t_g}: \sum_{g,s} t_g r_{g,s};$$

$$\text{s.t.}: \sum_g t_g r_{g,s} \geq r_{min};$$

$$\sum_g t_g \leq 1;$$

and

$$t_g \geq 0.$$

$t_g$ indicates the resource allocated to the terminal, $t_g r_{g,s}$ indicates the data throughput of the terminal device on the target time-frequency resource, $r_{min}$ indicates a minimum requirement on the throughput, and the last two inequality constraints indicate that a resource allocation variable needs to meet a non-negative and normalized condition.

For example, a grouping result is: {STA 2} and {STA 1, STA 3}, and a time-frequency resource slice allocated by $t_g$ is 0.25:0.75. The AP 2 may serve the STA 2 in the first 25% of the scheduling period (or a scheduling resource at another location), and the AP 1/AP 3 serves the STA 1/STA 3 in the last 75% of the scheduling period (or a scheduling resource at another location).

In a possible implementation, the data rate expectation obtained when each terminal is scheduled on the target time-frequency resource may be obtained through reinforcement learning by using the data rate expectation as the Q function. For example, a learning process of the Q function may be expressed as:

$$\hat{Q}(u,a) \leftarrow (1 - \alpha)\hat{Q}(u,a) + \alpha \left[ R(u,a) + \gamma \arg\max_{a' \in C} \hat{Q}(u',a') \right]$$

In the current scenario, it is considered that a sum of data rates on each time resource is as large as possible, and resource allocation in the current phase does not affect a sum of data rates in a next phase. It is assumed that $\gamma = 0$, and an R function is decomposed and substituted into the foregoing formula, to obtain:

$$\sum_{g,s} t_g \hat{r}_{g,s}(u) \leftarrow (1 - \alpha) \sum_{g,s} t_g \hat{r}_{g,s}(u) + \alpha \sum_{g,s} t_g r_{g,s}^{(-1)}(u),$$

where $r_{g,s}^{(-1)}$ is the data rate of the STA $s$ in the group $g$ in the previous period.

The foregoing formula may be equivalently expressed as update of $\hat{r}_{g,s}$:

$$\hat{r}_{g,s}(u) \leftarrow (1-\alpha)\hat{r}_{g,s}(u) + \alpha r_{g,s}^{(-1)}(u)$$

In other words, the reinforcement learning corresponds to estimation of each user data rate in each group.

Similarly, a decision-making process may be equivalently expressed as:

$$\max_{t_g} \Sigma_{g,s}\, t_g r_{g,s}(u);\ \text{and}$$

$$\text{s.t.}\ \boldsymbol{t} \in C,$$

where

$C$ includes constraints $t_g \geq 0$, $\Sigma_g\, t_g = 1$, and in addition, a minimum data rate constraint may further be considered:

$$\sum_g t_g r_{g,s}(u) \geq r_{min}$$

In addition, a change period of a network environment $s$ is much longer than that of the reinforcement learning process. Therefore, $s$ is considered as a constant, and may be rounded in the reinforcement learning process.

In this embodiment, specific implementation of the reinforcement learning may be expressed as estimation of $\hat{r}_{g,u}$ and linear programming solving.

In scenarios in which more network status information needs to be considered and network performance needs to be optimized for a longer time, the status can be reflected in an update process of the Q function to achieve desired effect.

It should be understood that, at the beginning of the resource allocation, a slot ratio may be randomly allocated to each concurrent group. A control terminal may deliver, to the AP i and the AP j, transmission slots of STAs served by the AP i and the AP j. The AP i and the AP j respectively transmit data to the STA i and the STA j in the notified slot. In a transmission process, the AP i and the AP j feed back an actual transmission rate of each STA in each concurrent group to a central processing node. The control device may adjust the slicing ratio of the time-frequency resource based on QoS requirements and transmission rate feedback of the STA i and the STA j that have the data transmission requirements. For a specific procedure, refer to FIG. 8.

In the foregoing manner, long-term information (namely, signal interference information) may help filter a high-potential policy, and reduce exploration overheads; and short-term information (namely, a transmitted data rate and the like) helps quickly adjust the policy, to ensure policy adaptation efficiency.

403: Send the scheduling information to the plurality of APs.

After the scheduling information is obtained, the scheduling information may be delivered to each AP, so that each AP may control data receiving and sending of the terminal device based on the time-frequency resource indicated by the scheduling information.

In actual deployment, signal interference information (for example, RSSIs) between all APs and STAs may not be obtained due to reasons such as poor terminal collaboration and poor wireless channel quality. In this embodiment of this application, concurrent groups may be respectively constructed for all possible situations by estimating missing values, and finally a slot ratio of each group is adjusted based on slice rate feedback, to select a most suitable group.

Specifically, in a possible implementation, the plurality of terminals include at least one first terminal and at least one second terminal. Second information of the at least one first terminal may be obtained, where the second information includes signal interference caused to each first terminal by a part of APs in non-connected APs when the first terminal is scheduled. In other words, signal interference information is missing in the first information obtained by the control device (in the second information, information about signal interference caused to a part of first terminals by a part of APs in non-connected APs when the first terminals are scheduled is missing). Third information may be predicted based on the second information, where the third information includes signal interference caused to each first terminal by APs other than the part of APs in the non-connected APs when the first terminal is scheduled. The second information and the third information are used to form the first information.

Different signal interference information may be obtained based on different prediction methods. In a possible implementation, the third information specifically includes a plurality of signal interference expectations of the APs other than the part of APs, and different signal interference expectations are obtained based on the second information by using different prediction methods. The plurality of terminals may be grouped into a combination of a plurality of terminal groups based on the signal interference, where one signal interference expectation in the third information is used to determine a combination of one terminal group. Specifically, the third information may include the plurality of signal interference expectations, each signal interference expectation and other known signal interference information may form complete signal interference information of AP-STA. Each complete signal interference information may be used to group the terminals into the plurality of terminal groups (for a grouping manner, refer to the descriptions of the embodiment corresponding to step 402, and details are not described herein again).

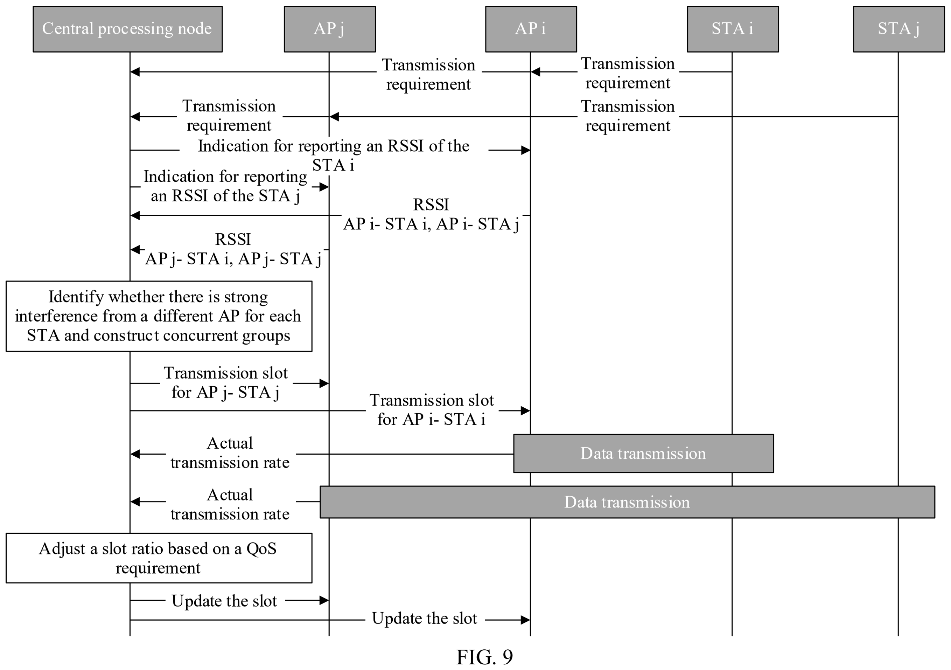

For example, FIG. 9 is a diagram of interaction between specific network elements.

The target terminal group is selected from the combination of the plurality of terminal groups based on the target time-frequency resource to maximize the data throughputs of the plurality of terminals. For example, when time-frequency resource allocation for each terminal group is calculated to maximize the data throughputs of the plurality of terminals, it may be determined that almost no time-frequency resource can be allocated to some terminal groups, and the terminal groups may be removed (a prerequisite is that each terminal is grouped into one terminal group and can be grouped into only one terminal group). The scheduling information is determined based on the target time-frequency resource and the target terminal group to maximize the data throughputs of the plurality of terminals.

The following uses an example in which the first information is an RSSI to describe an embodiment of constructing concurrent groups when RSS information is missing (the scenario in FIG. 5 is used as an example). In actual deployment, RSSIs between all APs and STAs may not be obtained due to reasons such as poor terminal collaboration and poor wireless channel quality. Concurrent groups are respectively constructed for all possible situations by estimating missing values, and finally a slot ratio of each group is adjusted based on slice rate feedback, to select a most suitable group.

For example, the AP 1/AP 2/AP 3 may separately report link signal strength from the STAs to the control device, as shown in Table 5.

Table 5

| RSSI | AP 1 | AP 2 | AP 3 |
|------|------|------|------|
| STA 1 | -32 | -55 | |
| STA 2 | -47 | -39 | |
| STA 3 | | -53 | -26 |

A plurality of possible missing-value imputations are obtained according to different estimation criteria:
(a) An imputation result obtained according to a first estimation criterion is as follows:

| RSSI | AP 1 | AP 2 | AP 3 |
|------|------|------|------|
| STA 1 | -32 | -55 | -41 |
| STA 2 | -47 | -39 | -51 |
| STA 3 | -37 | -53 | -26 |

(b) An imputation result obtained according to a second estimation criterion is as follows:

| RSSI | AP 1 | AP 2 | AP 3 |
|------|------|------|------|
| STA 1 | -32 | -55 | -46 |
| STA 2 | -47 | -39 | -46 |
| STA 3 | -39 | -53 | -26 |

Based on a method for constructing concurrent groups, concurrent groups are constructed for the two imputation results:

(a) concurrent groups for the first imputation result: {STA 1} and {STA 2, STA 3};
(b) concurrent groups for the second imputation result: {STA 1, STA 3} and {STA 2}; and
(c) all the possible concurrent groups being considered as an output of the concurrent group construction module: {STA 1}, {STA 2, STA 3}, {STA 1, STA 3}, and {STA 2}.

Embodiments of this application provide a resource allocation method. The method includes: obtaining first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource; determining scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, signal interference caused to each terminal by an AP connected to a terminal included in a target terminal group to which the terminal belongs is less than a threshold, and time-frequency sub-resources allocated to terminals included in different target terminal groups do not overlap; and sending the scheduling information to the plurality of APs. In the foregoing manner, the time-frequency sub-resources allocated to the terminals included in the different target terminal groups do not overlap. In other words, non-overlapping time-frequency resources are allocated to the terminals in the different terminal groups, so that the terminals in the different groups can receive and send data on different time-frequency resources. A terminal and a terminal connected to an AP that causes strong signal interference to the terminal are grouped into different terminal groups. Therefore, when receiving and sending data, each terminal device is not subject to signal interference of an AP connected to another terminal device not in a terminal group to which the terminal device belongs. This can further improve data transmission efficiency in a multi-AP collaboration scenario.

The foregoing describes this application from a perspective of the method. The following further describes this application from a perspective of an apparatus.

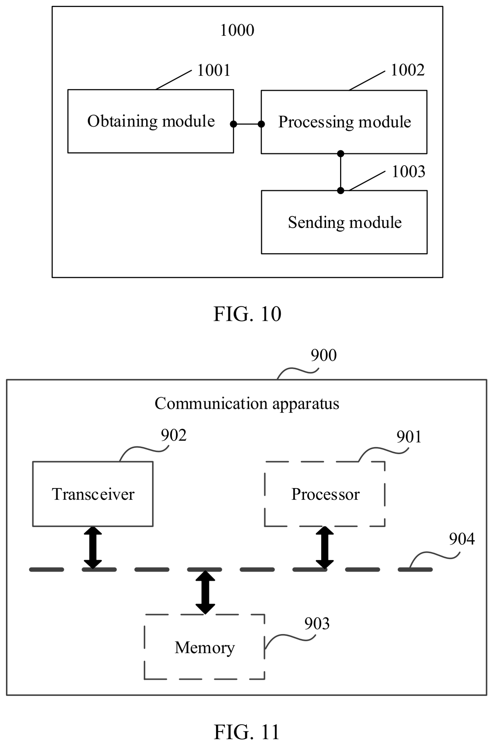

FIG. 10 shows a resource allocation apparatus 1000 according to this application. As shown in FIG. 10, the resource allocation apparatus 1000 includes an obtaining module 1001, a processing module 1002, and a sending module 1003.

The obtaining module 1001 is configured to obtain first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource.

For specific descriptions of the obtaining module 1001, refer to the descriptions of step 401 in the foregoing embodiment. Details are not described herein again.

The processing module 1002 is configured to determine scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes signal interference greater than a threshold to the terminal belong to different target terminal groups, and time-frequency sub-resources allocated to terminals included in different target terminal groups do not overlap.

For specific descriptions of the processing module 1002, refer to the descriptions of step 402 in the foregoing embodiment. Details are not described herein again.

The sending module 1003 is configured to send the scheduling information to the plurality of APs.

For specific descriptions of the sending module 1003, refer to the descriptions of step 403 in the foregoing embodiment. Details are not described herein again.

In a possible implementation, signal interference caused to each terminal by an AP connected to a non-associated terminal included in another target terminal group is greater than signal interference caused by an AP connected to a terminal included in a target terminal group to which the terminal belongs, and the non-associated terminal is a terminal connected to a different AP.

In a possible implementation, time-frequency sub-resources allocated to terminals included in a same target terminal group overlap.

In a possible implementation, a same time-frequency sub-resource is allocated to terminals included in a same target terminal group.

In a possible implementation, signal interference caused to each terminal by an AP connected to a terminal included in a target terminal group to which the terminal belongs is less than the threshold, signal interference caused to each terminal by an AP connected to a non-associated terminal included in another target terminal group is greater than the threshold, and the non-associated terminal is a terminal connected to a different AP.

In a possible implementation, the first information includes received signal strength corresponding to each terminal and each of the plurality of APs.

In a possible implementation, the processing module is specifically configured to:
determine the scheduling information based on the first information and the target time-frequency resource to maximize data throughputs of the plurality of terminals.

In a possible implementation, the obtaining module is further configured to:

obtain a data rate expectation obtained when each terminal is scheduled on the target time-frequency resource, where the data rate expectation is used to determine the data throughput; and
the data rate expectation is determined based on a historical data rate of each terminal, or the data rate expectation is obtained through reinforcement learning by using the data rate expectation as a Q function.

In a possible implementation, the plurality of terminals include at least one first terminal and at least one second terminal, and the obtaining module is further configured to:

obtain second information of the at least one first terminal, where the second information includes signal interference caused to each first terminal by a part of APs in non-connected APs when the first terminal is scheduled; and
the processing module is further configured to:
predict third information based on the second information, where the third information includes signal interference caused to each first terminal by APs other than the part of APs in the non-connected APs when the first terminal is scheduled, and the second information and the third information are used to form the first information.

In a possible implementation, the third information specifically includes a plurality of signal interference expectations of the APs other than the part of APs, and different signal interference expectations are obtained by using different prediction apparatuses based on the second information; and
the processing module is specifically configured to:

group the plurality of terminals into a combination of a plurality of terminal groups based on the signal interference, where one signal interference expectation in the second information, the third information, and fourth information is used to determine a combination of one terminal group;
select the target terminal group from the combination of the plurality of terminal groups based on the target time-frequency resource to maximize the data throughputs of the plurality of terminals; and
determine the scheduling information based on the target time-frequency resource and the target terminal group to maximize the data throughputs of the plurality of terminals.

In a possible implementation, the target time-frequency resource is a resource in a scheduling period.
For ease of description, FIG. 11 is a diagram of a structure of a communication apparatus 900 according to an embodiment of this application. The communication apparatus 900 may be a control device, an AP (for example, the AP in the foregoing method embodiments), a STA, or a chip therein. FIG. 11 shows only main components of the communication apparatus 900. The communication apparatus 900 includes at least a transceiver 902.
Optionally, the transceiver 902 may also be referred to as an input/output port, a communication port, a communication interface, or the like.
Optionally, the communication apparatus 900 further includes a processor 901. In addition, the communication apparatus 900 may further include a memory 903.
Optionally, a bus 904 may be further added to the apparatus 900. The bus 904 is configured to establish connections/a connection between the transceiver 902 and/or the memory 903 and the processor 901.
The processor 901 is mainly configured to process a communication protocol and communication data, control the communication apparatus, execute a software program, and process data of the software program. The memory 903 is mainly configured to store the software program and the data. The transceiver 902 may include a control circuit and an antenna. The control circuit is mainly configured to perform conversion between a baseband signal and a radio frequency signal, and process the radio frequency signal. The antenna is mainly configured to receive and send a radio frequency signal in a form of an electromagnetic wave. For example, the transceiver 902 may be a touchscreen, a display, a keyboard, or the like, and is mainly configured to: receive data entered by a user, and output data to the user.
After the communication apparatus 900 is powered on, the processor 901 may read a software program in the memory 903, interpret and execute instructions of the software program, and process data of the software program. When data needs to be sent wirelessly, the processor 901 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 901. The processor 901 converts the baseband signal into data and processes the data.
Optionally, the memory 903 may be located in the processor 901.
In any one of the foregoing designs, the processor 901 may include a communication interface configured to implement receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 901 may store instructions. The instructions may be a computer program. The computer program is run on the processor 901, to enable the communication apparatus 900 to perform the method described in any one of the foregoing embodiments. The computer program may be fixed in the processor 901. In this case, the processor 901 may be implemented by hardware.

In an implementation, the communication apparatus 900 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 11. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

In a possible product form, the control device, the AP, and the STA described in embodiments of this application may be implemented by using a general-purpose processor.

It should be understood that the communication apparatuses in the foregoing various product forms have any function of the control device, the AP, or the STA in any one of the foregoing embodiments. Details are not described herein again.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receiving circuit, so that the apparatus performs the method in any of the foregoing embodiments.

An embodiment of this application further provides a wireless communication system, including a control device and a plurality of APs. The control device may perform the method in any one of the foregoing embodiments.

Method or algorithm steps described with reference to content disclosed in this application may be implemented by hardware, or may be implemented by a processor executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and advantageous effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A resource allocation method, wherein the method comprises:

   obtaining first information of a plurality of terminals, wherein the plurality of terminals are connected to a plurality of access points APs, the plurality of terminals are terminals that wait to be scheduled on a target time-frequency resource, and the first information comprises signal interference caused to each terminal by a non-connected AP when the terminal is scheduled on the target time-frequency resource;
   determining scheduling information based on the first information and the target time-frequency resource, wherein the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes the signal interference greater than a threshold to the terminal belong to different target terminal groups, and time-frequency sub-resources allocated to terminals comprised in different target terminal groups do not overlap; and
   sending the scheduling information to the plurality of APs.

2. The method according to claim 1, wherein signal interference caused to each terminal by an AP connected to a non-associated terminal comprised in another target terminal group is greater than signal interference caused by an AP connected to a terminal comprised in a target terminal group to which the terminal belongs, and the non-associated terminal is a terminal connected to a different AP.

3. The method according to claim 1 or 2, wherein a same time-frequency sub-resource is allocated to terminals comprised in a same target terminal group.

4. The method according to any one of claims 1 to 3, wherein signal interference caused to each terminal by an AP connected to a terminal comprised in a target terminal group to which the terminal belongs is less than the threshold, signal interference caused to each terminal by an AP connected to a non-associated terminal comprised in another target terminal group is greater than the threshold, and the non-associated terminal is a terminal connected to a different AP.

5. The method according to any one of claims 1 to 4, wherein the first information comprises received signal strength corresponding to each terminal and each of the plurality of APs.

6. The method according to any one of claims 1 to 5, wherein the determining scheduling information based on the first information and the target time-frequency resource comprises:
   determining the scheduling information based on the first information and the target time-frequency resource to maximize data throughputs of the plurality of terminals.

7. The method according to claim 6, wherein the method further comprises:

   obtaining a data rate expectation obtained when each terminal is scheduled on the target time-frequency resource, wherein the data rate expectation is used to determine the data throughput; and
   the data rate expectation is determined based on a historical data rate of each terminal, or the data rate expectation is obtained through reinforcement learning by using the data rate expectation as a Q function.

8. The method according to any one of claims 1 to 7, wherein the plurality of terminals comprise at least one first terminal and at least one second terminal, and the method further comprises:

obtaining second information of the at least one first terminal, wherein the second information comprises signal interference caused to each first terminal by a part of APs in non-connected APs when the first terminal is scheduled; and

predicting third information based on the second information, wherein the third information comprises signal interference caused to each first terminal by APs other than the part of APs in the non-connected APs when the first terminal is scheduled, and the second information and the third information are used to form the first information.

9. The method according to claim 8, wherein the third information specifically comprises a plurality of signal interference expectations of the APs other than the part of APs, and different signal interference expectations are obtained based on the second information by using different prediction methods; and

the determining scheduling information based on the first information and the target time-frequency resource comprises:

grouping the plurality of terminals into a combination of a plurality of terminal groups based on the signal interference, wherein one signal interference expectation in the third information is used to determine a combination of one terminal group;

selecting the target terminal group from the combination of the plurality of terminal groups based on the target time-frequency resource to maximize the data throughputs of the plurality of terminals; and

determining the scheduling information based on the target time-frequency resource and the target terminal group to maximize the data throughputs of the plurality of terminals.

10. The method according to any one of claims 1 to 9, wherein the target time-frequency resource is a resource in a scheduling period.

11. A resource allocation apparatus, wherein the apparatus comprises:

an obtaining module, configured to obtain first information of a plurality of terminals, wherein the plurality of terminals are connected to a plurality of access points APs, the plurality of terminals are terminals that wait to be scheduled on a target time-frequency resource, and the first information comprises signal interference caused to each terminal by a non-connected AP when the terminal is scheduled on the target time-frequency resource;

a processing module, configured to determine scheduling information based on the first information and the target time-frequency resource, wherein the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes the signal interference greater than a threshold to the terminal belong to different target terminal groups, and time-frequency sub-resources allocated to terminals comprised in different target terminal groups do not overlap; and

a sending module, configured to send the scheduling information to the plurality of APs.

12. The apparatus according to claim 11, wherein signal interference caused to each terminal by an AP connected to a non-associated terminal comprised in another target terminal group is greater than signal interference caused by an AP connected to a terminal comprised in a target terminal group to which the terminal belongs, and the non-associated terminal is a terminal connected to a different AP.

13. The apparatus according to claim 11 or 12, wherein a same time-frequency sub-resource is allocated to terminals comprised in a same target terminal group.

14. The apparatus according to any one of claims 11 to 13, wherein signal interference caused to each terminal by an AP connected to a terminal comprised in a target terminal group to which the terminal belongs is less than the threshold, signal interference caused to each terminal by an AP connected to a non-associated terminal comprised in another target terminal group is greater than the threshold, and the non-associated terminal is a terminal connected to a different AP.

15. The apparatus according to any one of claims 11 to 13, wherein the first information comprises received signal strength corresponding to each terminal and each of the plurality of APs.

16. The apparatus according to any one of claims 11 to 15, wherein the processing module is specifically configured to:

determine the scheduling information based on the first information and the target time-frequency resource to maximize data throughputs of the plurality of terminals.

17. The apparatus according to claim 16, wherein the obtaining module is further configured to:

obtain a data rate expectation obtained when each terminal is scheduled on the target time-frequency resource, wherein the data rate expectation is used to determine the data throughput; and
the data rate expectation is determined based on a historical data rate of each terminal, or the data rate expectation is obtained through reinforcement learning by using the data rate expectation as a Q function.

18. The apparatus according to any one of claims 11 to 17, wherein the plurality of terminals comprise at least one first terminal and at least one second terminal, and the obtaining module is further configured to:

obtain second information of the at least one first terminal, wherein the second information comprises signal interference caused to each first terminal by a part of APs in non-connected APs when the first terminal is scheduled; and
the processing module is further configured to:
predict third information based on the second information, wherein the third information comprises signal interference caused to each first terminal by APs other than the part of APs in the non-connected APs when the first terminal is scheduled, and the second information and the third information are used to form the first information.

19. The apparatus according to claim 18, wherein the third information specifically comprises a plurality of signal interference expectations of the APs other than the part of APs, and different signal interference expectations are obtained by using different prediction apparatuses based on the second information; and
the processing module is specifically configured to:

group the plurality of terminals into a combination of a plurality of terminal groups based on the signal interference, wherein one signal interference expectation in the second information, the third information, and the fourth information is used to determine a combination of one terminal group;
select the target terminal group from the combination of the plurality of terminal groups based on the target time-frequency resource to maximize the data throughputs of the plurality of terminals; and
determine the scheduling information based on the target time-frequency resource and the target terminal group to maximize the data throughputs of the plurality of terminals.

20. The apparatus according to any one of claims 11 to 19, wherein the target time-frequency resource is a resource in a scheduling period.

21. A system, comprising a control device and a plurality of APs communicating with the control device, wherein the control device is configured to perform the resource allocation method according to any one of claims 1 to 10.

22. A communication apparatus, comprising at least one processor, coupled to a memory, wherein

the memory is configured to store a program or instructions; and
the at least one processor is configured to execute the program or the instructions, so that the apparatus implements the method according to any one of claims 1 to 10.

23. A computer program product comprising program instructions, wherein when the program instructions are run on a computer, the computer is enabled to perform the method according to any one of claims 1 to 10.

24. A computer-readable storage medium, wherein the computer-readable storage medium stores program instructions, and when the program instructions are run, the method according to any one of claims 1 to 10 is performed.

FIG. 1

FIG. 2

Home network
management platform

Gigabit to the room

Carrier's
network

Gigabit to the home

10G-PON

Master
bedroom

Guest
room    Living room

VRPC/PAD

Mobile phone

Robotic vacuum
cleaner

Primary optical
network terminal

Study room

From the
primary optical
network terminal

Kitchen/Balcony/
Bathroom/Toilet

Temperature
and humidity
sensor

Camera   Networked air conditioner

**Home optical network**

Home optical network: about 50 m

Wi-Fi access: 5 m

Enable fully
connected home IoT

FIG. 3

Obtain first information of a plurality of terminals, where the plurality of terminals are connected to a plurality of access points APs, the plurality of terminals are terminals that wait to be scheduled on a target time-frequency resource, and the first information includes signal interference caused to each terminal by a non-connected AP when the terminal is scheduled on the target time-frequency resource ——— 401

Determine scheduling information based on the first information and the target time-frequency resource, where the scheduling information indicates a time-frequency sub-resource allocated to each terminal, the time-frequency sub-resource is selected from the target time-frequency resource, the plurality of terminals are grouped into a plurality of target terminal groups, each terminal and a terminal connected to an AP that causes the signal interference greater than a threshold to the terminal belong to different target terminal groups, and time-frequency sub-resources allocated to terminals included in different target terminal groups do not overlap ——— 402

Send the scheduling information to the plurality of APs ——— 403

FIG. 4

FIG. 5

FIG. 6

FIG. 7

FIG. 8

FIG. 9

1000

1001

Obtaining module

1002

Processing module

1003

Sending module

FIG. 10

900

Communication apparatus

902

Transceiver

901

Processor

904

903

Memory

FIG. 11

## INTERNATIONAL SEARCH REPORT

| International application No. |
| --- |
| **PCT/CN2024/084660** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; 3GPP; IEEE; CNKI: 干扰, 资源, 调度, 分配, 分组, 接入点, 基站, 终端, 用户, 阈值, 强度, 功率, interfer+, resource, schedul+, group, access point, AP, BSS, terminal, UE, threshold, power, RSSI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116437458 A (HUAWEI TECHNOLOGIES CO., LTD.) 14 July 2023 (2023-07-14) description, paragraphs [0002]-[0242] | 1-24 |
| X | CN 105813088 A (SHANGHAI RESEARCH CENTER FOR WIRELESS COMMUNICATIONS (WICO) et al.) 27 July 2016 (2016-07-27) description, paragraphs [0042]-[0108] | 1-7, 10-17, 20-24 |
| A | CN 114466462 A (HUAWEI TECHNOLOGIES CO., LTD.) 10 May 2022 (2022-05-10) entire document | 1-24 |
| A | CN 115699852 A (BEIJING XIAOMI MOBILE SOFTWARE CO., LTD.) 03 February 2023 (2023-02-03) entire document | 1-24 |
| A | US 2020178267 A1 (TELECOM ITALIA S.P.A.) 04 June 2020 (2020-06-04) entire document | 1-24 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 June 2024** | **24 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084660**

| Patent document cited in search report | | | Publication date (day/month/year) | Patent family member(s) | | | Publication date (day/month/year) |
|---|---|---|---|---|---|---|---|
| CN | 116437458 | A | 14 July 2023 | None | | | |
| CN | 105813088 | A | 27 July 2016 | None | | | |
| CN | 114466462 | A | 10 May 2022 | None | | | |
| CN | 115699852 | A | 03 February 2023 | None | | | |
| US | 2020178267 | A1 | 04 June 2020 | US | 11153890 | B2 | 19 October 2021 |

Form PCT/ISA/210 (patent family annex) (July 2022)

# EP 4 686 288 A1

**Patent documents cited in the description**

- CN 202310364814